# EUROPÄISCHE PATENTANMELDUNG

(11) **EP 0 557 784 A2**
(43) Veröffentlichungstag der Anmeldung: **01.09.1993**
(21) Anmeldenummer: 93101988.9
(22) Anmeldetag: 09.02.1993
(51) Int. Cl.: B27D 5/00, B26D 7/01, B26D 7/06, B23Q 1/14, B23D 47/04

(54) **Vorrichtung zum Beschneiden von mit Bodenbelag beklebten Trägerplatten**

(30) Priorität: 24.02.1992 DE 4205543
(71) Anmelder: Böhm, Christian, D-45239 Essen (DE)
(72) Erfinder: Böhm, Christian, D-45239 Essen (DE)
(74) Vertreter: Lewandowsky, Klaus

(57) **Zusammenfassung**

Es handelt sich um eine Vorrichtung zum Beschneiden der seitlich überstehenden Ränder von auf einer quadratisch oder rechteckförmig ausgebildeten Trägerplatte (20) aufgeklebtem Bodenbelag (19). Dabei wird die Trägerplatte (20) motorisch angetrieben an zwei mit einstellbarem Abstand und parallel zueinander liegenden Schneidmessern (24) zum Abschneiden zweier parallel liegender Ränder vorbei bewegt bis zu einer Wendestelle 30, in der sie um 90 Winkelgrade verdreht wird. Anschließend läuft die Trägerplatte (20) erneut an den mit umgekehrter Drehrichtung laufenden Schneidmessern (24) vorbei, wobei die beiden anderen parallel liegenden Ränder von der Trägerplatte (20) bündig abgeschnitten werden.

## Beschreibung

Die Erfindung betrifft eine Vorrichtung zum Beschneiden der seitlich überstehenden Ränder von auf einer quadratisch oder rechteckförmig ausgebildeten Trägerplatte aufgeklebtem Bodenbelag.

Beim Verlegen von Fußböden in industriell genutzten Räumen, wie beispielsweise Computerräumen, werden sogenannte Doppelböden vorgesehen. Die Fußböden werden aus einzelnen quadratisch oder rechteckförmig ausgebildeten Trägerplatten mit aufgeklebtem Bodenbelag hergestellt, die auf über dem Boden aufgebauten Tragkonstruktionen angeordnet werden. Auf diese Weise werden Hohlräume für zu verlegende elektrische Leitungen, Kabel oder dergl. geschaffen. Nach dem Aufkleben des Bodenbelags auf eine Trägerplatte müssen die überstehenden Ränder bündig zur Trägerplatte abgeschnitten werden, um ein fugenloses Zusammenfügen der einzelnen Trägerplatten zu einer Fußbodenfläche zu ermöglichen.

Der Erfindung liegt nun die Aufgabe zugrunde eine einfach aufgebaute und bequem zu bedienende Vorrichtung zu schaffen, mit der diese überstehenden Ränder von den Trägerplatten maßgenau und auf wirtschaftliche Weise abgeschnitten werden können.

Dies wird erfindungsgemäß dadurch erreicht, daß die Trägerplatte motorisch angetrieben an zwei mit einstellbarem Abstand und parallel zueinander liegenden Schneidemessern translatorisch vorbeibewegbar ist, daß die Trägerplatte in ihrer Auflageebene um 90 Winkelgrade drehbar angeordnet ist und daß sie nach der Drehung an den Schneidemessern vorbei in ihre Ausgangslage zurückbewegbar ist.

Zu diesem Zweck ist ein motorisch angetriebener Transportwagen von seiner Ausganglage auf Schienen an den Schneidemessern vorbei zu einer Wendestelle und von dieser zurück in seine Ausgangslage selbsttätig bewegbar. In einer bevorzugten Ausführungsform ist auf dem Transportwagen eine Auflagepatte zur Aufnahme einer Trägerplatte um eine vertikale Mittelachse drehbar gelagert, die bei in der wendestelle befindlichem Transportwagen um 90 Winkelgrade verdrehbar ist.
Mit einer derartigen Vorrichtung können in einfacher und wirtschaftlicher Weise an Fußbodenplatten der in Rede stehenden Art die überstehenden Ränder der aufgeklebten Bodenbeläge sauber und genau abgeschnitten werden.

Im einzelnen ist die Erfindung so getroffen, daß zum Bewegen des Transportwagens ein parallel zu den Schienen sich erstreckendes, um Umlenkräder geführtes und von einem Motor angetriebenes Endlostransportmittel und zu beiden Seiten der Schienen in Höhe der Trägerplatte Führungsleisten vorgesehen sind, um eine genaue Ausrichtung der Trägerplatten zu gewährleisten.

Die Mittel zur lagegenauen Ausrichtung einer in der Wendestelle um 90 Winkelgrade gedrehten Trägerplatte sind dadurch gekennzeichnet, daß zum einen an der Unterseite der Trägerplatte Rastrollen gelagert sind, die in auf der Oberseite des Transportwagens vorgesehene Rastvertiefungen eingreifen, und daß zum anderen die Mittelachse der Trägerplatte unterhalb des Transportwagens eine Nockenscheibe trägt, die bei in der Wendestelle befindlichem Transportwagen mit von einem Schrittmotor angetriebenen Stellzapfen einer Stellscheibe in Eingriff stehen.

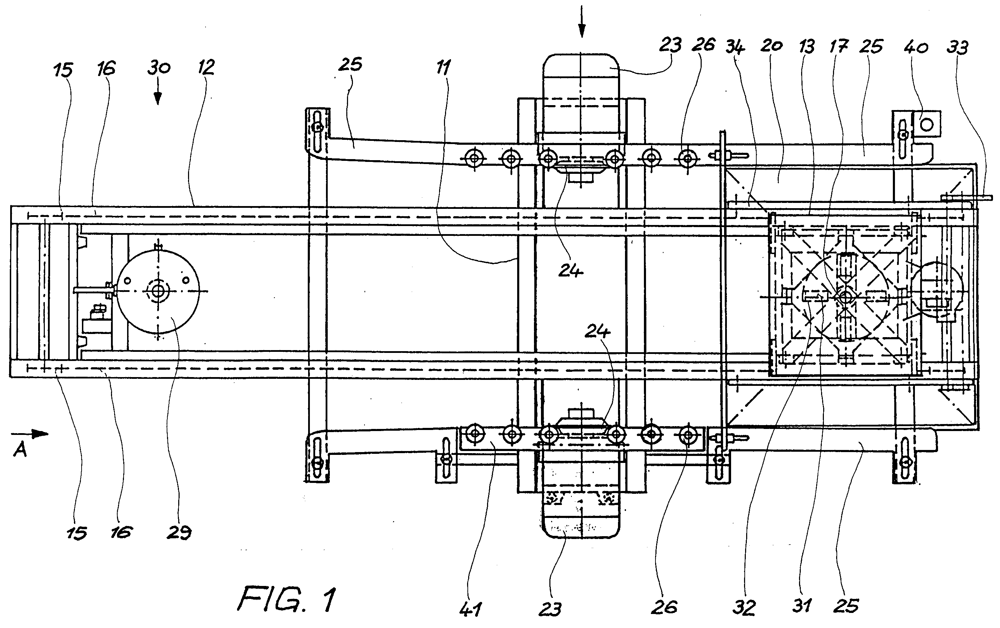

Die weiteren Merkmale und Vorteile sind der Beschreibung eines in der Zeichnung dargestellten Ausführungsbeispiels der Erfindung sowie den weiteren Unteransprüchen zu entnehmen. Die Zeichnung zeigt in der
- Fig. 1: die erfindungsgemäße Vorrichtung in einer Draufsicht,

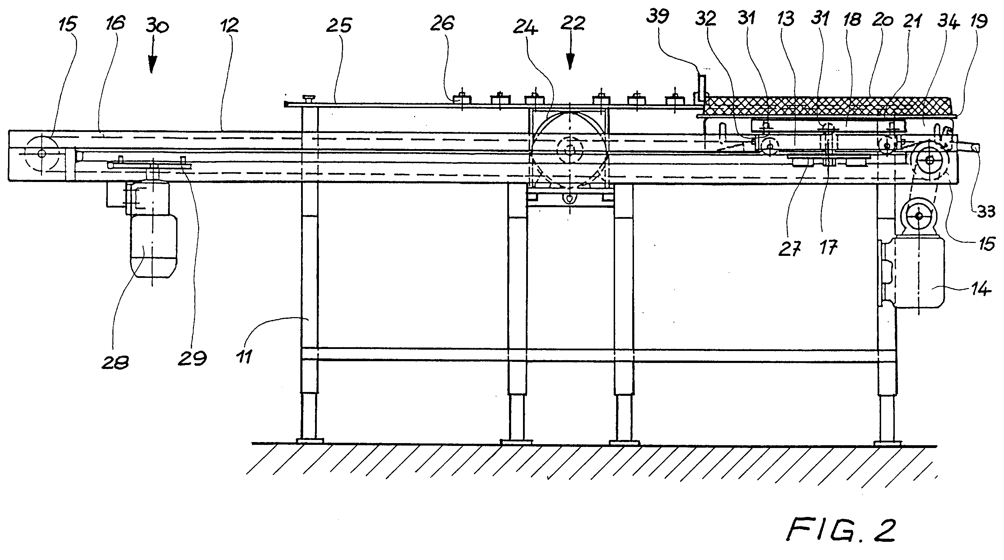

- Fig. 2: die Vorrichtung gemäß Fig.1 in einer Seitenansicht,

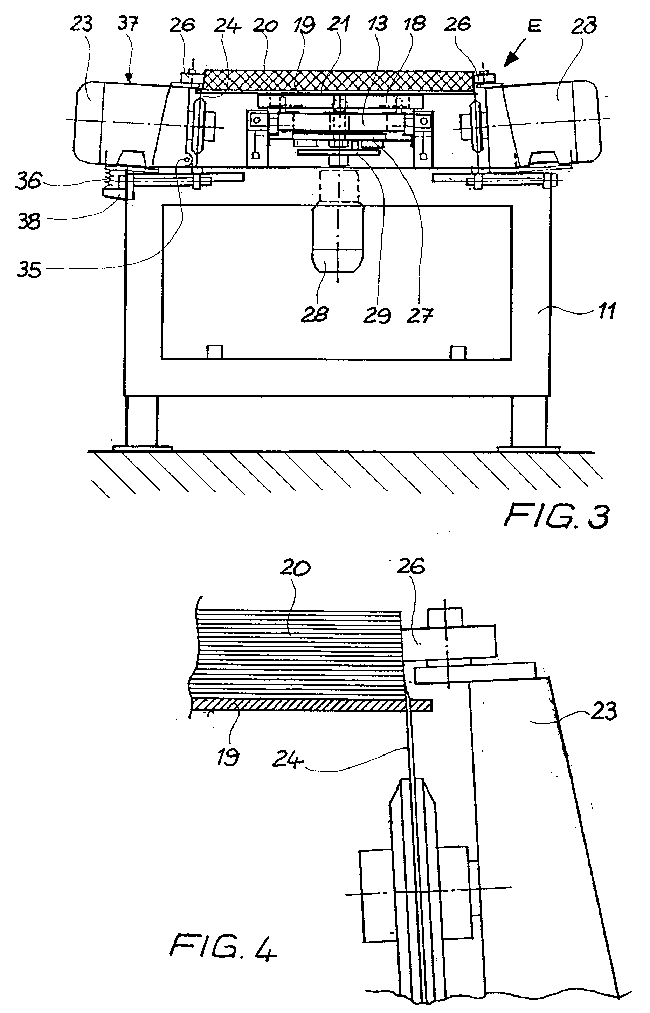

- Fig. 3: die Vorrichtung gemäß Fig.1 in einer Frontansicht in Pfeilrichtung A und
- Fig. 4: eine Einzelheit E der Vorrichtung gemäß Fig.3 in vergrößerter Darstellung.

Das in der Zeichnung dargestellte Ausführungsbeispiel einer Vorrichtung zum Beschneiden der überstehenden Ränder von auf Trägerplatten aufgeklebten Bodenbelägen besteht aus einem Gestell 11, auf dem zwei horizontal und parallel verlaufende Schienen 12 mit U-förmigem Querschnitt angebracht sind. Auf den Schienen 12 ist Transportwagen 13 aus seiner dargestellten Ausgangslage zu einer am anderen Ende der schienen vorgesehenen wendestelle 30 und wieder zurück in seine Ausgangslage translatorisch bewegbar. Zur Bewegung des Transportwagens 1 ist ein von einem Motor 14 angetriebenes und über Umlenkräder 15 geführtes Endlostransportmittel 16, wie eine Transportkette oder dergl., vorgesehen. Die Transportkette liegt innerhalb der im Querschnitt U-förmigen Schienen 12 und ist mit dem Transportwagen 13 gekoppelt.

Auf dem Transportwagen 13 ist mittels einer vertikalen Mittelachse 17 eine Auflageplatte 18 zum Auflegen der einen zu beschneidenden Bodenbelag 19 aufweisenden Trägerplatte 20 drehbar gelagert. Die Trägerplatte 20 wird mittels eines auf der Auflageplatte 18 angeordneten klettverschlußartigen Nadelkissens 21 gehalten.

Zu genauen Führung der Trägerplatte 20 beim Durchlaufen einer Schneidstation 22, in der zu beiden Seiten der Schienen 12 jeweils ein von einem Motor 23 angetriebenes Schneidmesser 24 vorgesehen ist, dienen Führungsleisten 25, die im Bereich der Trägerplatten 20 parallel zu den Schienen 12 verlaufen und mit mehreren lose drehbaren Leitrollen 26 bestückt sind.

Auf der Unterseite des Transportwagens 13 ist auf dem Ende der Mittelachse 17 eine Mitnehmerscheibe 27 verdrehbar angeordnet. Dieser Mitnehmerscheibe 27 ist eine in der Wendestelle 30 angeordnete und von einem Schrittmotor 28 jeweils um 90 Winkelgrade verdrehbare Zapfenscheibe 29 zugeordnet. Durch diese Maßnahme werden bei der Bewegung der Trägerplatte 20 von ihrer Ausgangslage zur Wendestelle 30 zwei erste parallel liegende überstehende Ränder des Bodenbelags abgeschnitten und nach der Drehung der Trägerplatte 20 um 90 Winkelgrade, die durch den Eingriff der Zapfen der Zapfenscheibe 29 in die Mitnehmerscheibe 27 erfolgt, werden auf dem Rückweg der Trägerplatte 20 von der Wendestelle 30 zu ihrer Ausgangslage mittels der Schneidmesser 24 die um 90 Winkelgrade versetzten überstehenden Ränder abgeschnitten. In einer einzigen Hin- und Rückbewegung wird eine Trägerplatte 20 montagefertig beschnitten.

Zur lagegenauen Einstellung der Auflageplatte 18 sind in derselben Rastrollen 31 drehbar gelagert, die in korrespondierende in dem Transportwagen 13 ausgebildete Rastvertiefungen 32 eingreifen.

Um eine lagegenaue Ausrichtung der Trägerplatte 20 auf der Auflageplatte 18 zu gewährleisten, sind zwei parallel liegende mittels eines Handhebels 33 anhebbare und absenkbare Leisten 34 vorgesehen. Die Trägerplatte 20 wird auf die angehobenen Leisten 34 gelegt und richtet sich innerhalb der Führungsleisten 25 aus. In dieser Lage wird die Trägerplatte 20 dann auf die Auflageplatte 18 abgesenkt.

Eine weitere vorteilhafte Maßnahme zur Durchführung eines genauen Schnitts entlang der Kante einer Trägerplatte 20 besteht darin, daß eines der Schneidmesser 24 um eine parallel zur Schiene 12 verlaufende Achse 35 verschwenkbar angeordnet ist. Mittels einer Druckfeder 36, die sich einerseits am Gehäuse 37 des Motors 23 und andererseits an einem gestellfesten Vorsprung 38 abstützt, wird ein die Leitrollen 26 tragender separater Abschnitt 41 der Führungsleiste 25 derart verschwenkt, daß die Leitrollen 26 federnd an der Seitenwand einer die Schneidstation 22 durchlaufenden Trägerplatte 20 anliegen. Da das Schneidmesser 25 und die Mantelfläche der Leitrollen präzise miteinander ausgerichtet sind, ist ein exakter bündiger Beschnitt der Trägerplatte 20 möglich.

Die Arbeitsweise der Vorrichtung ist folgende;
Eine Trägerplatte 20 mit überstehenden Rändern des aufgeklebten Bodenbelags 19 wird auf die mittels des Handhebels 33 angehobenen Leisten 34 mit der Belagseite nach unten so aufgelegt, daß sie zwischen den Führungsleisten 25 liegt und an einer quer zur Transportrichtung angeordneten Anschlagleiste 39 anschlägt.

Anschließend wird die Trägerplatte 20 abgesenkt, wobei die Trägerplatte 20 auf der Auflageplatte 18 zuliegen kommt und sich der Bodenbelag 19 mit dem Nadelkissen 21 verkrallt.

Nach dem Betätigen eines Schalters 40 ist der Motor 14 in Betrieb und der Transportwagen 13 mit der Trägerplatte 20 wird mittels des Endlostransportmittels 16 von seiner Ausgangslage an den Schneidmessern 24 vorbei bis zur Wendestelle 30 transportiert. Dabei werden zwei parallel liegende Ränder des Bodenbelags 19 abschnitten.

Nachdem der Transportwagen 13 die Wendestelle 30 erreicht hat, wird über einen nicht dargestellten Endschalter der Motor 14 abgeschaltet, so daß der Transportwagen 13 stehen bleibt und die Mitnehmerscheibe 27 und die Zapfenscheibe 29 in Eingriff gelangen. Zugleich wird der Schrittmotor 28 eingeschaltet und verdreht die Auflageplatte 18 um 90 Winkelgrade bis die Rastrollen 31 in die nächsten Rastvertiefungen 32 einfallen. Danach ist der Schrittmotor wieder außer Betrieb geschaltet, und der Motor 14 mit umgekehrter Drehrichtung laufend wieder eingeschaltet, so daß der Transportwagen 13 mit der Trägerplatte 20 von der Wendestelle zu seiner Ausgangslage zurückläuft. Dabei werden beim Passieren der Schneidstation 22 die zwei anderen parallel liegenden Ränder von den ebenfalls mit umgekehrter Drehrichtung laufenden Schneidmessern 24, die als Vierbogenschneidmesser ausgebildet sind, abgeschnitten.

In die Ausgangslage zurückgekehrt, werden durch Betätigen des Handhebels 33 die Leisten 34 angehoben und damit die Trägerplatte 20 von der Auflageplatte 18 getrennt und aus der Vorrichtung entnommen.

Bei der Verarbeitung von rechteckförmigen Trägerplatten ist es denkbar, daß die Vorrichtung elektrisch so gesteuert ist, daß nach dem Drehen der Trägerplatte in der Wendestelle um 90 Winkelgrade die beiden Schneidmesser mit ihren Motoren sich auf einer geeigneten Führung quer zur Transportrichtung der Trägerplatte bewegen, beispielsweise einer Gewindespindel, um sich auf die unterschiedliche Breite der Trägerplatte vor ihrem Rücklauf einzustellen.

## Patentansprüche

1. Vorrichtung zum Beschneiden der seitlich überstehenden Ränder von auf einer quadratisch oder rechteckförmig ausgebildeten Trägeplatte aufgeklebtem Bodenbelag,
**dadurch gekennzeichnet,**
daß die Trägerplatte (20) motorisch angetrieben an zwei mit einstellbarem Abstand und parallel zueinander liegenden Schneidmessern (24) translatorisch vorbeibewegbar ist, daß die Trägerplatte (20) in ihrer Auflageebene um 90 Winkelgrade drehbar angeordnet ist und daß sie nach der Drehung an den Schneidmessern (24) vorbei in ihre Ausgangslage zurückbewegbar ist.

2. Vorrichtung nach Anspruch 1, dadurch gekennzeichnet, daß ein motorisch angetriebener Transportwagen (13) von seiner Ausgangslage auf Schienen (12) an den Schneidmessern (24) vorbei zu einer Wendestelle (30) und von dieser zurück in seine Ausgangslage selbsttätig bewegbar ist.

3. Vorrichtung nach den Ansprüchen 1 und 2, dadurch gekennzeichnet, daß auf dem Transportwagen (13) eine Auflageplatte (18) zur Aufnahme einer Trägerplatte (20) um eine vertikale Mittelachse (17) drehbar gelagert ist, die bei in der Wendestelle (30) befindlichem Transportwagen um 90 Winkelgrade verdrehbar ist.

4. Vorrichtung nach den Ansprüchen 1 bis 3, dadurch gekennzeichnet, daß zum Bewegen des Transportwagens (13) ein parallel zu den Schienen (12) sich erstreckendes, um Umlenkräder (15) geführtes und von einem Motor (14) angetriebenes Endlostransportmittel (16) vorgesehen ist.

5. Vorrichtung nach einem der Ansprüche 1 bis 4, dadurch gekennzeichnet, daß zu beiden Seiten der Schienen (12) in Höhe der Trägerplatte (20) Führungsleisten (25) vorgesehen sind.

6. Vorrichtung nach Anspruch 5, dadurch gekennzeichnet, daß auf den Führungsleisten (25) parallel zu den Schienen (12) mehrere Leitrollen (26) drehbar gelagert sind.

7. Vorrichtung nach einem der Ansprüche 1 bis 6, dadurch gekennzeichnet, daß die Auflageplatte (18) von dem Transportwagen (13) in vertikaler Richtung abhebbar und absenkbar geführt ist.

8. Vorrichtung nach einem der Ansprüchen 1 bis 7, dadurch gekennzeichnet, daß an der Unterseite der Trägerplatte (20) Rastrollen (31) gelagert sind, die in auf der Oberseite des Transportwagens (13) vorgesehene Rastvertiefungen (32) eingreifen.

9. Vorrichtung nach einem der Ansprüche 1 bis 8, dadurch gekennzeichnet, daß zwei parallel verlaufende anhebbare und absenkbare Leisten (34) vorgeshen sind, auf denen eine zugeführte Trägerplatte (20) auflegbar ist.

10. Vorrichtung nach einem der Ansprüche 1 bis 9, dadurch gekennzeichnet, daß für das Anheben und Absenken der Leisten (34) ein Handhebel (33) vorgesehen ist, mittels dem zugleich Mittel zur Halterung der Trägerplatte (20) auf der Auflageplatte (18) einsetzbar sind.

11. Vorrichtung nach Anspruch 10, dadurch gekennzeichnet, daß die Haltemittel aus einem klettverschlußartig ausgebildeten Nadelkissen (21) bestehen.

12. Vorrichtung nach den Ansprüchen 9 und 10, dadurch gekennzeichnet, daß die Leisten (34) in einer Stift-Langloch-Führung geführt sind.

13. Vorrichtung nach einem der Ansprüche 1 bis 12, dadurch gekennzeichnet, daß die Mittelachse (17) der Auflageplatte (18) unterhalb des Transportwagens eine Mitnehmerscheibe (27) trägt, die bei in der Wendestelle (30) befindlichem Transportwagen (13) mit einer von einem Schrittmotor (28) angetriebenen Zapfenscheibe (29) in Eingriff steht.

14. Vorrichtung nach einem der Ansprüche 1 bis 13, dadurch gekennzeichnet, daß eines der Schneidmesser (24) gemeinsam mit seinem Motor (23) senkrecht zur Längsrichtung der Schienen (12) verschwenkbar gelagert ist, derart, daß bei die Schneidstation (22) durchlaufender Trägerplatte (20) die auf einem mit dem Gehäuse des Motors (23) mitverschwenkbaren Abschnitt (41) der Führungsleiste sitzenden Leitrollen (26) sich selbstausrichtend an der Trägerplatte (20) abstützen.

15. Vorrichtung nach einem der Ansprüche 1 bis 14, dadurch gekennzeichnet, daß die Schneidmesser (24) als Vierbogenschneidmesser ausgebildet sind.
